# EUROPÄISCHE PATENTSCHRIFT

(11) **EP 3 765 770 B1**
(45) Veröffentlichungstag und Bekanntmachung des Hinweises auf die Patenterteilung: **16.10.2024**
(21) Anmeldenummer: 19711893.8
(22) Anmeldetag: 15.03.2019
(51) Int. Cl.: F16J 15/06, F16J 15/08, F16J 15/44

(54) **DICHTUNGSANORDNUNG, BATTERIE- ODER STEUERUNGSKASTEN, KRAFTFAHRZEUG UND VERFAHREN ZUR HERSTELLUNG EINER DICHTUNGSANORDNUNG**
SEALING ASSEMBLY, BATTERY BOX OR CONTROL BOX, MOTOR VEHICLE AND METHOD FOR PRODUCING A SEALING ASSEMBLY
ENSEMBLE D'ÉTANCHÉITÉ, COMPARTIMENT À BATTERIE OU DE COMMANDE, VÉHICULE AUTOMOBILE ET PROCÉDÉ DE FABRICATION D'UN ENSEMBLE D'ÉTANCHÉITÉ

(30) Priorität: 16.03.2018 DE 102018204085
(43) Veröffentlichungstag der Anmeldung: 20.01.2021
(73) Patentinhaber: ElringKlinger AG, 72581 Dettingen (DE)
(72) Erfinder: GRUHLER, Tobias Michael, 72793 Pfullingen (DE); DWENGER, Stefan, 72762 Reutlingen (DE); LINKOR, Robert, 72800 Eningen u.A. (DE)
(74) Vertreter: DTS Patent- und Rechtsanwälte PartmbB
(86) Internationale Anmeldenummer: PCT/EP2019/056553
(87) Internationale Veröffentlichungsnummer: WO 2019/175391

(56) Entgegenhaltungen:
- FR-A1- 2 659 122
- US-A- 1 986 465
- US-A- 3 738 670
- US-A- 5 618 047
- US-A1- 2004 172 824

## Beschreibung

Die vorliegende Erfindung betrifft eine Dichtungsanordnung, insbesondere eine Dichtungsanordnung zur Abdichtung eines ersten Fluidraums von einem zweiten Fluidraum oder mehreren Fluidräumen. Die Dichtungsanordnung umfasst ein Dichtelement zur Anordnung zwischen einem ersten Objekt und einem zweiten Objekt. Aus dem Stand der Technik sind sogenannte Trägerdichtungen oder Metall-Elastomer-Dichtungen bekannt, die zur Abdichtung zwischen zwei Bauteilen oder Objekten eingesetzt werden.

Aus der US 3 738 670 A, gemäß der Präambel von Anspruch 1, sind Dichtelemente bekannt, welche einen Überstand und eine Aufnahme aufweisen. Ein Teilbereich des Überstands ist in die Aufnahme einführbar, wobei der Überstand und die Aufnahme ineinandergreifende Seitenwände aus elastischem Material aufweisen. Die Seitenwände des Überstands und der Aufnahme verlaufen parallel zueinander.

Diese aus dem Stand der Technik bekannten Träger- oder Metall-Elastomer-Dichtungen weisen üblicherweise einen insbesondere metallischen Grundkörper und einen am Grundkörper angeordneten elastischen Dichtkörper auf. Mittels derartiger Träger- oder Metall-Elastomer-Dichtungen können zwei Objekte einfach dichtend im Bereich einer planen Verbindungsfläche miteinander verbunden werden, wobei ein Einbringen einer Nut in die Bauteile zur Befestigung eines Dichtelements vorzugsweise vermieden werden kann. Toleranzprobleme beim Einbringen der Nut treten daher nicht auf. Im Gegensatz zu einer Flüssigabdichtung, welche oftmals bei zu verbindenden Bauteilen mit einer planen Verbindungsfläche gewählt werden, sind Träger- oder Metall-Elastomer-Dichtungen zudem vergleichsweise leicht wieder demontierbar.

Zudem können miteinander zu verbindende Objekte, insbesondere miteinander zu verbindende metallische Objekte, durch den metallischen Grundkörper einer Träger- oder Metall-Elastomer-Dichtung durchkontaktiert werden. Somit kann mittels der Träger- oder Metall-Elastomer-Dichtung eine erhöhte elektromagnetische Verträglichkeit (EMV) bereitgestellt werden. Folglich erfreuen sich Träger- oder Metall-Elastomer-Dichtungen einer wachsenden Beliebtheit.

Üblicherweise werden die Dichtkörper der Träger- oder Metall-Elastomer-Dichtungen in einem Spritzgussverfahren an einen insbesondere ringförmigen, vorzugsweise metallischen, Grundkörper angespritzt. Die Größe eines zu verwendenden Spritzgusswerkzeugs, insbesondere die Größe einer benötigten Spritzgussmaschine, wird dabei unter anderem durch die Größe bzw. Dimension des Grundkörpers bestimmt.

Bislang ist es daher beispielsweise nicht möglich, Träger- oder Metall-Elastomer-Dichtungen für Batteriekästen von Elektrofahrzeugen herzustellen, da diese aufgrund ihrer Größe und/oder Dimension nicht in bekannten Spritzgusswerkzeugen und/oder Spritzgussmaschinen herstellbar sind.

Der vorliegenden Erfindung liegt daher die Aufgabe zugrunde, eine Dichtungsanordnung bereitzustellen, welche einerseits einfach und kostengünstig herstellbar ist und zudem eine zuverlässige Abdichtung eines ersten Fluidraums von einem zweiten Fluidraum ermöglicht.

Diese Aufgabe wird durch eine Dichtungsanordnung mit den Merkmalen des Anspruchs 1 gelöst.

Das Dichtelement der Dichtungsanordnung umfasst insbesondere zwei oder mehrere miteinander verbindbare oder miteinander verbundene Dichtelementbauteile, welche jeweils einen Grundkörperteil und einen am Grundkörperteil angeordneten elastischen Dichtkörperteil umfassen.

Die Grundkörperteile der Dichtelementbauteile bilden insbesondere einen vorzugsweise formstabilen Grundkörper des Dichtelements.

Insbesondere bilden die Grundkörperteile der Dichtelementbauteile einen Grundkörper zum Bereitstellen einer lasttragenden Funktion des Dichtelements.

Unter einer lasttragenden Funktion wird im Rahmen dieser Beschreibung und der beigefügten Ansprüche insbesondere eine Übertragung von Druckkräften, insbesondere zwischen zwei Objekten oder Bauteilen, verstanden.

Vorzugsweise bilden die elastischen Dichtkörperteile der Dichtelementbauteile einen elastischen Dichtkörper zum Bereitstellen einer Dichtfunktion des Dichtelements.

Der Grundkörper des Dichtelements ist vorzugsweise ringförmig, insbesondere ringförmig geschlossen, ausgebildet, wenn die Dichtelementbauteile miteinander verbunden sind.

Unter einer Ringform ist im Rahmen dieser Beschreibung und der beigefügten Ansprüche insbesondere eine geschlossene Form des Dichtelements zu verstehen. Die Ringform des Dichtelements kann dabei insbesondere eine Kreisringform oder eine von einer Kreisringform abweichende Form sein.

Da die Dichtelementbauteile miteinander verbindbar sind, wobei die Grundkörperteile einen Grundkörper bilden und wobei die Dichtkörperteil einen Dichtkörper bilden, kann vorzugsweise erreicht werden, dass die elastischen Dichtkörperteile aufgrund der kleineren Größe oder Dimension der einzelnen Dichtelementbauteile an jeweils einen Grundkörperteil in einem Spritzgussprozess angespritzt werden können. Anschließend können die einzelnen Dichtelementbauteile zu einem Dichtelement verbunden werden. Daher kann insbesondere ermöglicht werden, dass die elastischen Dichtkörperteile in einem vergleichsweise kleinen Spritzgusswerkzeug und/oder einer vergleichsweise kleinen Spritzgussmaschine herstellbar sind.

Vorzugsweise sind der Grundkörper und/oder die Grundkörperteile aus einem zumindest näherungsweise unflexiblen oder steifen Material hergestellt.

Das Dichtelement und/oder der Grundkörper des Dichtelements sind vorzugsweise flächig ausgebildet.

Das Dichtelement und/oder der Grundkörper erstrecken sich insbesondere zumindest näherungsweise entlang einer Ebene, insbesondere entlang einer Haupterstreckungsebene, des Dichtelements.

Der elastische Dichtkörper und/oder die elastischen Dichtkörperteile sind vorzugsweise durch Spritzgießen hergestellt.

Insbesondere sind der elastische Dichtkörper und/oder die elastischen Dichtkörperteile an den Grundkörper und/oder an die Grundkörperteile angespritzt. Unter Anspritzen wird im Rahmen dieser Beschreibung und der beigefügten Ansprüche insbesondere ein Verbinden der Grundkörperteile mit den Dichtkörperteilen verstanden, wobei die elastischen Dichtkörperteile derart in einem Spritzgussverfahren hergestellt werden, dass sie am Grundkörper und/oder an den Grundkörperteilen befestigt sind.

Der elastische Dichtkörper und/oder die elastischen Dichtkörperteile sind insbesondere Spritzgussteile.

Vorzugsweise ist das Dichtelement eine Trägerdichtung und/oder eine Metall-Elastomer-Dichtung.

Der elastische Dichtkörper umfasst vorzugsweise eine oder mehrere Dichtlippen.

Bei einer Ausgestaltung der Erfindung ist vorgesehen, dass die Dichtelementbauteile, insbesondere zur Herstellung einer oder mehrerer ringförmig geschlossener Formen des Grundkörpers, puzzleartig formschlüssig miteinander verbindbar sind.

Die Dichtelementbauteile sind insbesondere lösbar verbindbar.

Vorzugsweise sind die Dichtelementbauteile durch mittelbare oder unmittelbare Verbindung der Grundkörperteile miteinander, insbesondere an einem Stoßbereich der Grundkörperteile, verbindbar.

Unter einer mittelbaren Verbindung der Grundkörperteile wird im Rahmen dieser Beschreibung und der beigefügten Ansprüche insbesondere eine Verbindung der Grundkörperteile mittels an den Grundkörperteilen angeordneter elastischer Dichtkörperteile verstanden.

Unter einer unmittelbaren Verbindung wird im Rahmen dieser Beschreibung und der beigefügten Ansprüche insbesondere eine Verbindung der Grundkörperteile unmittelbar miteinander verstanden, das heißt es ist insbesondere kein elastischer Dichtkörperteil zur Verbindung der Grundkörperteile vonnöten.

Bei einer Ausgestaltung der Erfindung ist vorgesehen, dass das Dichtelement mehrere identische Dichtelementbauteile und/oder mehrere identische Grundkörperteile und/oder mehrere identische elastische Dichtkörperteile umfasst.

Dabei ist es insbesondere denkbar, dass zwei oder mehrere, insbesondere alle, Dichtelementbauteile vollkommen identisch ausgebildet sind. Insbesondere sind dann sowohl die Grundkörperteile als auch die elastischen Dichtkörperteile ebenfalls vollkommen identisch ausgebildet.

Alternativ dazu ist es insbesondere möglich, dass zwar zwei oder mehrere, insbesondere alle, Grundkörperteile identisch ausgebildet sind, die elastischen Dichtkörperteile aber voneinander verschieden ausgebildet sind.

Alternativ dazu ist es möglich, dass die Grundkörperteile verschieden ausgebildet sind, wobei jedoch zwei oder mehrere, insbesondere alle, elastischen Dichtkörperteile identisch ausgebildet sind.

Idealerweise kann somit die für die Dichtungsanordnung benötigte Anzahl verschiedener Bauteile insgesamt reduziert werden, wobei die Dichtungsanordnung insgesamt kostengünstiger herstellbar ist. Vorzugsweise kann eine Dichtungsanordnung mit einem nach einem Baukastenprinzip herstellbaren Dichtelement bereitgestellt werden, so dass mittels eines Baukastens Dichtelemente in verschiedenen Geometrien realisierbar sind.

Bei einer Ausgestaltung der Erfindung ist vorgesehen, dass die Grundkörperteile jeweils einen oder mehrere, insbesondere jeweils zwei, Verbindungsabschnitte zur Verbindung der Grundkörperteile miteinander umfassen.

Die Verbindungsabschnitte sind vorzugsweise einteilig mit den Grundkörperteilen ausgebildet.

Die Grundkörperteile sind mittels der Verbindungsabschnitte vorzugsweise formschlüssig verbindbar.

Insbesondere sind die Grundkörperteile mittels der Verbindungsabschnitte puzzleartig verbindbar.

Vorzugsweise sind die Verbindungsabschnitte derart komplementär zueinander ausgebildet, dass sie formschlüssig ineinander eingreifen, wenn die Grundkörperteile miteinander verbunden sind.

Bei einer Ausgestaltung der Erfindung ist vorgesehen, dass die Grundkörperteile in einer Richtung senkrecht zu einer Haupterstreckungsebene des Dichtelements miteinander verbindbar, insbesondere steckverbindbar, sind.

Vorzugsweise sind die Grundkörperteile in einer Montagerichtung, welche insbesondere senkrecht zur Haupterstreckungsebene des Dichtelements verläuft, miteinander verbindbar.

Die Verbindungsabschnitte weisen insbesondere jeweils einen oder mehrere, insbesondere jeweils zwei, Hinterschnittabschnitte auf.

Vorzugsweise sind die Hinterschnittabschnitte derart ausgebildet, dass miteinander verbundene Grundkörperteile im Bereich der Verbindungsabschnitte in einer Richtung parallel zur Haupterstreckungsebene des Dichtelements gekoppelt, insbesondere formschlüssig verbunden, sind.

Vorzugsweise sind miteinander verbundene Grundkörperteile im Bereich der Verbindungsabschnitte in einer Richtung parallel zur Haupterstreckungsebene des Dichtelements insbesondere formschlüssig verankert.

Die Verbindungsabschnitte umfassen vorzugsweise jeweils eine Verbindungsabschnittsgeometrie, wobei zwei Verbindungsabschnitte jeweils derart komplementär zueinander ausgebildet sind, dass jeweils ein Verbindungsabschnitt eine Positivform der Verbindungsabschnittsgeometrie umfasst, wobei jeweils ein Verbindungsabschnitt eine Negativform der Verbindungsabschnittsgeometrie umfasst.

Vorzugsweise sind die Positivform und die Negativform der Verbindungsabschnittsgeometrie komplementär zueinander ausgebildet.

Die Positivform und/oder die Negativform der Verbindungsabschnittsgeometrie ist insbesondere eine Schwalbenschwanzgeometrie.

Günstig kann es insbesondere sein, wenn die Verbindungsabschnitte und/oder die Verbindungsabschnittsgeometrie symmetrisch zu einer Symmetrieebene ausgebildet sind.

Insbesondere korrespondieren jeweils nur zwei Verbindungsabschnitte einer Dichtungsanordnung miteinander.

Vorzugsweise sind jeweils nur zwei Verbindungsabschnitte komplementär zueinander ausgebildet, d.h. sie weisen eine zueinander komplementäre Verbindungsabschnittsgeometrie mit einer Positivform und einer dazu komplementären Negativform auf. Insbesondere sind verschiedene Verbindungsabschnittsgeometrien vorgesehen. Somit kann vermieden werden, dass die Grundkörperteile und/oder die Dichtelementbauteile falsch miteinander verbunden werden.

Vorzugsweise kann somit ein Dichtelement bereitgestellt werden, welches einfach herstellbar, insbesondere einfach montierbar, ist.

Bei einer Ausgestaltung der Erfindung ist vorgesehen, dass die elastischen Dichtkörperteile jeweils einen Koppelabschnitt zur Kopplung aneinander anliegender oder einander überlappender elastischer Dichtkörperteile umfassen.

Die Koppelabschnitte sind insbesondere derart ausgebildet, dass die elastischen Dichtkörperteile im Bereich der Koppelabschnitte dichtend aneinander anliegen, wenn die Dichtelementbauteile und/oder die Grundkörperteile miteinander verbunden sind, insbesondere wenn das Dichtelement dichtend zwischen einem ersten Objekt und einem zweiten Objekt angeordnet ist.

Vorzugsweise weisen die Koppelabschnitte jeweils eine Koppelgeometrie auf.

Insbesondere weisen die Koppelabschnitte jeweils zweier elastischer Dichtkörperteile eine zueinander komplementäre Koppelgeometrie auf.

Die Koppelgeometrie der Koppelabschnitte weist in Montagerichtung der Dichtungsbauteile und/oder der Grundkörperteile, das heißt in einer Richtung senkrecht zu einer Haupterstreckungsebene des Dichtelements, insbesondere keine Hinterschnitte auf. Somit sind die elastischen Dichtkörperteile vorzugsweise bei Montage oder Verbindung der Grundkörperteile in einer Richtung senkrecht oder schräg, das heißt quer, zur Haupterstreckungsebene dichtend aneinander anlegbar.

Vorzugsweise sind die Grundkörperteile mit daran angeordneten elastischen Dichtkörperteilen mittels der Verbindungsabschnitte in einer Richtung senkrecht zur Haupterstreckungsebene verbindbar, ohne dass eine Verbindung der Grundkörperteile von Hinterschnitten der Koppelgeometrie behindert wird.

Die Koppelgeometrie ist beispielsweise eine Fase oder eine Schrägfläche, das heißt eine schräg zur Haupterstreckungsebene angeordnete Fläche.

Alternativ oder ergänzend dazu ist denkbar, dass die Koppelgeometrie gestuft oder gewellt ausgebildet ist.

Bei einer Ausgestaltung der Erfindung ist vorgesehen, dass der elastische Dichtkörper an einer Kante des Grundkörpers angeordnet ist.

Vorzugsweise ist der elastische Dichtkörper an einer vom Grundkörper umgebenen inneren Kante und/oder an einer den Grundkörper umgebenden äußeren Kante angeordnet.

Bei einem im Montagezustand der Dichtungsanordnung ringförmig geschlossenen Grundkörper des Dichtelements ist der elastische Dichtkörper vorzugsweise an einer Innenkante des Grundkörpers, insbesondere an einer umlaufenden Innenkante des Grundkörpers, angeordnet, jedoch insbesondere im Bereich der Grundkörperteile und/oder der elastischen Dichtkörperteile unterbrochen.

Es ist insbesondere denkbar, dass der elastische Dichtkörper auch an einer den Grundkörper des Dichtelements umgebenden äußeren Kante des Grundkörpers angeordnet ist.

Vorzugsweise sind die elastischen Dichtkörperteile insbesondere durch Spritzgießen an einer Kante der Grundkörperteile angeordnet (sogenanntes edge-molding).

Bei einer Ausgestaltung der Erfindung ist vorgesehen, dass die elastischen Dichtkörperteile sich jeweils entlang einer Kante eines Grundkörperteils, insbesondere entlang einer Kante eines Stoßbereichs der Grundkörperteile, erstrecken.

Vorzugsweise erstrecken sich die elastischen Dichtkörperteile insbesondere auch entlang einer Kante der Verbindungsabschnitte der Grundkörperteile. Insbesondere folgt ein Verlauf der elastischen Dichtkörperteile dabei im Bereich eines Verbindungsabschnitts der Verbindungsabschnittsgeometrie.

Die elastischen Dichtkörperteile sind vorzugsweise an einer Positivform und/oder an einer Negativform der Verbindungsabschnittsgeometrie der Verbindungsabschnitte angeordnet.

Insbesondere ist dabei sowohl an der Positivform als auch an der Negativform der Verbindungsabschnittsgeometrie der Verbindungsabschnitte jeweils ein elastischer Dichtkörperteil angeordnet.

Alternativ dazu ist denkbar, dass nur an der Positivform oder nur an der Negativform der Verbindungsabschnittsgeometrie der Verbindungsabschnitte ein elastischer Dichtkörperteil angeordnet ist.

Die elastischen Dichtkörperteile sind insbesondere an einem Stoßbereich der Grundkörperteile angeordnet und bilden dort vorzugsweise eine Stoßfuge.

Unter einem Stoßbereich der Grundkörperteile wird im Rahmen dieser Beschreibung und der beigefügten Ansprüche insbesondere ein Fügebereich der Grundkörperteile verstanden.

Somit ist es denkbar, dass im Stoßbereich der Grundkörperteile an nur einem Grundkörperteil ein elastischer Dichtkörperteil angeordnet ist.

Alternativ dazu ist denkbar, dass im Stoßbereich der Grundkörperteile an beiden Grundkörperteilen jeweils ein elastischer Dichtkörperteil angeordnet ist, wobei die beiden elastischen Dichtkörperteile eine zueinander komplementäre Koppelgeometrie aufweisen.

Vorzugsweise ist jedem Grundkörperteil ein elastischer Dichtkörperteil zugeordnet. Somit entspricht die Anzahl der Dichtkörperteile insbesondere der Anzahl der Grundkörperteile.

Bei einer Ausgestaltung der Erfindung ist vorgesehen, dass der elastische Dichtkörper in eine Richtung senkrecht zu einer Haupterstreckungsebene des Dichtelements eine Dichtkörperhöhe aufweist, wobei der Grundkörper in einer Richtung senkrecht zur Haupterstreckungsebene des Dichtelements eine Grundkörperhöhe aufweist, wobei die Dichtkörperhöhe größer ist als die Grundkörperhöhe.

Die Dichtkörperhöhe und/oder die Grundkörperhöhe sind insbesondere gleichmäßig, d.h. der Dichtkörper und/oder der Grundkörper weisen in Höhenrichtung vorzugsweise eine gleichmäßige Höhe auf.

Insbesondere ist eine durchschnittliche Dichtkörperhöhe größer als eine durchschnittliche Grundkörperhöhe.

Somit kann vorzugsweise erreicht werden, dass der elastischer Dichtkörper bei einem zwischen zwei Objekten angeordneten Dichtelement zumindest bereichsweise komprimiert wird.

Vorzugsweise weist der Grundkörper eine Grundkörperhöhe im Bereich von 1 bis 3 mm, insbesondere im Bereich von 1,5 bis 2 mm auf.

Die Dichtkörperhöhe ist insbesondere ca. 15 bis 40 %, insbesondere ca. 25 %, größer als die Grundkörperhöhe.

Vorzugsweise weist der elastische Dichtkörper im Bereich einer Innenkante des Grundkörpers eine Dichtkörperhöhe auf, welche größer ist als eine Dichtkörperhöhe des elastischen Dichtkörpers im Bereich der Verbindungsabschnitte.

Bei einer Ausgestaltung der Erfindung ist vorgesehen, dass der elastische Dichtkörper ein Elastomermaterial umfasst oder aus einem Elastomermaterial gebildet ist, wobei das Elastomermaterial vorzugsweise ein Ethylen-Acrylat-Kautschuk (AEM), ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR) oder ein Silikon-Kautschuk (MVQ), insbesondere ein Vinyl-Methyl-Polysiloxan, ist und/oder dass der Grundkörper aus einem metallischen Grundkörpermaterial hergestellt ist oder ein metallisches Grundkörpermaterial umfasst, wobei das metallische Grundkörpermaterial insbesondere Stahl oder Aluminium ist.

Günstig kann es sein, wenn das Elastomermaterial eine Mischung eines oder mehrerer der oben genannten Kautschukmaterialien umfasst.

Alternativ oder ergänzend hierzu ist ferner denkbar, dass der Grundkörper aus einem Kunststoffmaterial hergestellt ist oder ein Kunststoffmaterial umfasst. Vorzugsweise umfasst das Kunststoffmaterial des Grundkörpers dabei Polyphenylensulfid (PPS), insbesondere faserverstärktes Polyphenylensulfid (PPS).

Bei einer Ausgestaltung der Erfindung ist vorgesehen, dass der Grundkörper und/oder die Grundkörperteile durch Stanzen und/oder durch Laserschneiden und/oder durch Wasserstrahlschneiden und/oder durch manuelles Schneiden hergestellt sind.

Alternativ oder ergänzend hierzu ist insbesondere denkbar, dass der Grundkörper und/oder die Grundkörperteile durch Spritzgießen hergestellt sind, insbesondere wenn der Grundkörper aus einem Kunststoffmaterial hergestellt ist.

Vorzugsweise sind der Grundkörper und/oder die Grundkörperteile vollständig durch Stanzen und/oder Laserschneiden aus einem Blechmaterial hergestellt.

Insbesondere werden dabei keine weiteren Verfahrensschritte zur Herstellung des Grundkörpers und/oder der Grundkörperteile durchgeführt.

Vorzugsweise sind somit auch die Verbindungsabschnitte der Grundkörperteile durch Stanzen und/oder Laserschneiden hergestellt.

Die Erfindung betrifft ferner einen Batterie- oder Steuerungskasten.

Unter einem Batteriekasten wird im Rahmen dieser Beschreibung und der beigefügten Ansprüche insbesondere ein Gehäuse für eine oder mehrere Batterien, insbesondere Batterien eines Elektro-Kraftfahrzeugs, verstanden.

Unter einem Steuerungskasten wird im Rahmen dieser Beschreibung und der beigefügten Ansprüche insbesondere ein Gehäuse für ein oder mehrere Steuerungsbauteile und/oder eine oder mehrere Steuervorrichtungen verstanden.

Der Erfindung liegt daher die weitere Aufgabe zugrunde, einen Batterie- oder Steuerungskasten bereitzustellen, bei welchem ein Dichtelement einfach und sicher montiert ist und somit ein erster Fluidraum zuverlässig von einem zweiten Fluidraum abgedichtet werden kann.

Diese Aufgabe wird durch einen Batterie- oder Steuerungskasten mit den Merkmalen des Anspruchs 8 gelöst.

Der Batterie- oder Steuerungskasten umfasst eine Dichtungsanordnung nach einem der Ansprüche 1 bis 7.

Das Dichtelement ist dabei insbesondere dichtend zwischen einem Kastengrundteil und einem Kastendeckel angeordnet.

Die Erfindung betrifft ferner ein Kraftfahrzeug.

Der Erfindung liegt daher die weitere Aufgabe zugrunde, ein Kraftfahrzeug bereitzustellen, bei welchem ein Dichtelement einfach und sicher montiert ist und somit ein erster Fluidraum zuverlässig von einem zweiten Fluidraum abgedichtet werden kann.

Diese Aufgabe wird durch ein Kraftfahrzeug mit den Merkmalen des Anspruchs 9 gelöst.

Das Kraftfahrzeug umfasst eine oder mehrere Dichtungsanordnungen nach einem der Ansprüche 1 bis 7.

Das Kraftfahrzeug umfasst ferner einen Batterie- oder Steuerungskasten nach Anspruch 8.

Die Erfindung betrifft ferner ein Verfahren zur Herstellung einer Dichtungsanordnung zur Abdichtung eines ersten Fluidraums von einem zweiten Fluidraum oder mehreren Fluidräumen.

Der Erfindung liegt daher die Aufgabe zugrunde, ein Verfahren zur Herstellung einer Dichtungsanordnung bereitzustellen, mit welchem eine Dichtungsanordnung einfach und kostengünstig herstellbar ist, welche eine zuverlässige Abdichtung eines ersten Fluidraums von einem zweiten Fluidraum ermöglicht.

Diese Aufgabe wird durch ein Verfahren mit den Merkmalen des Anspruchs 11 gelöst.

Das Verfahren umfasst insbesondere Folgendes: Bereitstellen mehrerer Dichtelementbauteile, welche jeweils einen Grundkörperteil und einem am Grundkörperteil angeordneten elastischen Dichtkörperteil umfassen; puzzleartiges und formschlüssiges Verbinden der Dichtelementbauteile miteinander.

Günstig kann es sein, wenn die verbundenen Dichtelementbauteile ein vorzugsweise geschlossenes, insbesondere ringförmig geschlossenes, Dichtelement bilden.

Insbesondere werden die Verfahrensschritte in der angegebenen Reihenfolge durchgeführt.

Vorzugsweise ist jedes einzelne bereitgestellte Dichtelementbauteil kleiner und/oder kürzer als das Dichtelement, welches im verbundenen Zustand der Dichtelementbauteile durch die Dichtelementbauteile gebildet wird.

Günstig kann es sein, wenn ein oder mehrere, insbesondere alle, bereitgestellten Dichtelementbauteile in einer Haupterstreckungsebene jeweils für sich genommen geringere Abmessungen aufweisen als das fertiggestellte Dichtelement, wenn dieses im verbundenen Zustand der Dichtelementbauteile durch die Dichtelementbauteile gebildet wird.

Günstig kann es sein, wenn die Abmessungen eines oder mehrerer, insbesondere aller, bereitgestellter Dichtelementbauteile in einer, zwei oder allen drei Raumrichtungen jeweils kleiner sind als die Abmessungen des Dichtelements als Ganzes, wenn dieses im verbundenen Zustand der Dichtelementbauteile durch die Dichtelementbauteile gebildet wird.

Bei einer Ausgestaltung des Verfahrens ist vorgesehen, dass die Dichtelementbauteile als voneinander separate Bauteile hergestellt werden, wobei jeweils ein elastischer Dichtkörperteil an jeweils einen Grundkörperteil in einem Spritzgussprozess angespritzt wird.

Vorzugsweise werden beim Herstellen der Grundkörperteile Verbindungsabschnitte zum formschlüssigen Verbinden der Grundkörperteile hergestellt.

Der Grundkörper und/oder die Grundkörperteile werden insbesondere durch Stanzen und/oder durch Laserschneiden, insbesondere aus einem Blechmaterial, hergestellt.

Vorzugsweise werden die elastischen Dichtkörperteile an eine Kante der Grundkörperteile angespritzt.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Dichtungsanordnung umfassend ein Dichtelement;
- Fig. 2: eine vergrößerte Darstellung des Bereichs II in Fig. 1;
- Fig. 3: eine schematische Draufsicht von oben auf das Dichtelement aus Fig. 1;
- Fig. 4: eine schematische Seitenansicht des Dichtelements aus Fig. 3 mit Blickrichtung in Richtung des Pfeils 4 in Fig. 3;
- Fig. 5: einen schematischen Schnitt durch das elastische Dichtelement aus Fig. 3 längs der Linie V-V in Fig. 3;
- Fig. 6: eine vergrößerte Darstellung des Bereichs VI aus Fig. 5 mit einem ersten Ausführungsbeispiel eines Koppelabschnitts;
- Fig. 7: eine der Fig. 6 entsprechende Darstellung eines zweiten Ausführungsbeispiels des Koppelabschnitts; und
- Fig. 8: eine der Fig. 6 entsprechende Darstellung eines dritten Ausführungsbeispiels des Koppelabschnitts.

Gleiche oder funktional äquivalente Elemente sind in sämtlichen Figuren mit denselben Bezugszeichen versehen.

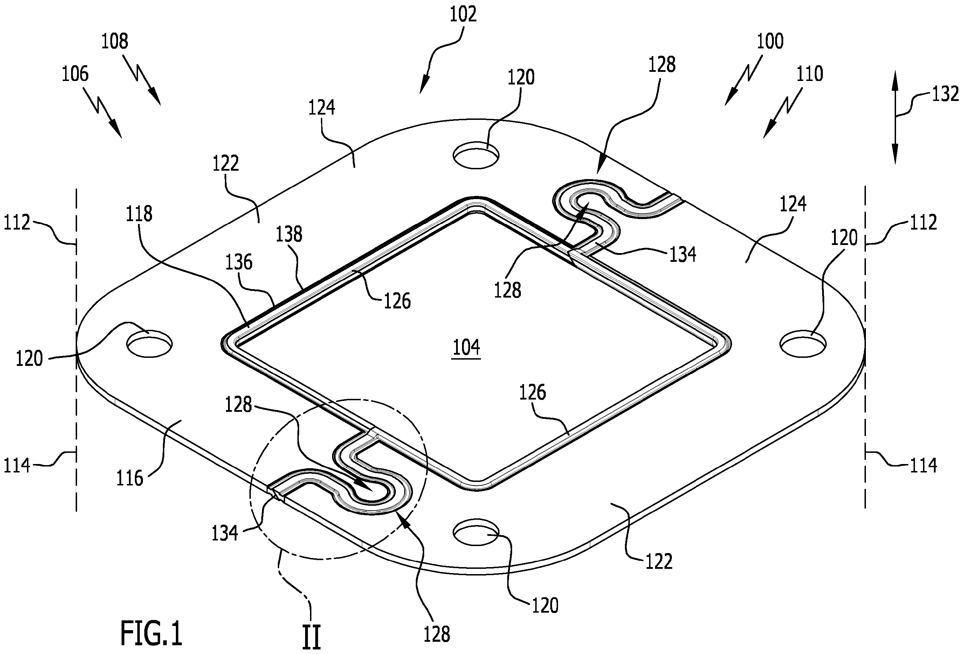

Fig. 1 zeigt eine als Ganzes mit 100 bezeichnete Dichtungsanordnung.

Die Dichtungsanordnung 100 dient insbesondere zur Abdichtung eines ersten Fluidraums 102 von einem zweiten Fluidraum 104, beispielsweise in einem Batterie- oder Steuerungskasten 106 eines Kraftfahrzeugs 108, insbesondere eines Elektro-Kraftfahrzeugs.

Die Dichtungsanordnung 100 umfasst ein Dichtelement 110 zur Anordnung zwischen einem ersten Objekt 112, beispielsweise einem Kastendeckel des Batterie- oder Steuerungskastens 106, und einem zweiten Objekt 114, beispielsweise einem Kastengrundteil des Batterie- oder Steuerungskastens 106.

Das Dichtelement 110 umfasst einen vorzugsweise formstabilen Grundkörper 116 und einen am Grundkörper 116 angeordneten elastischen Dichtkörper 118.

Das Dichtelement 110 ist somit insbesondere eine sogenannte Trägerdichtung und/oder eine sogenannte Metall-Elastomer-Dichtung.

Am Grundkörper 116 umfasst das Dichtelement 110 insgesamt vier Durchgangsöffnungen 120, durch welche jeweils ein Verbindungselement, insbesondere eine Schraube, zur Verbindung des ersten Objekts 112 mit dem zweiten Objekt 114 hindurchgesteckt werden kann.

Das Dichtelement 110 umfasst zwei miteinander verbindbare oder, wie in Fig. 1 gezeigt, verbundene Dichtelementbauteile 122.

Die Dichtelementbauteile 122 umfassen jeweils einen Grundkörperteil 124 und einen am Grundkörperteil 124 angeordneten elastischen Dichtkörperteil 126.

Die Grundkörperteile 124 der Dichtelementbauteile 122 bilden den Grundkörper 116 und stellen somit eine lasttragende Funktion des Dichtelements 110 bereit.

Die elastischen Dichtkörperteile 126 der Dichtelementbauteile 122 bilden den elastischen Dichtkörper 118 und stellen somit eine Dichtfunktion des Dichtelements 110 bereit.

Die Grundkörperteile 124 des Grundkörpers 116 umfassen insbesondere jeweils zwei Verbindungsabschnitte 128 zur gegenseitigen Verbindung der Grundkörperteile 124 miteinander.

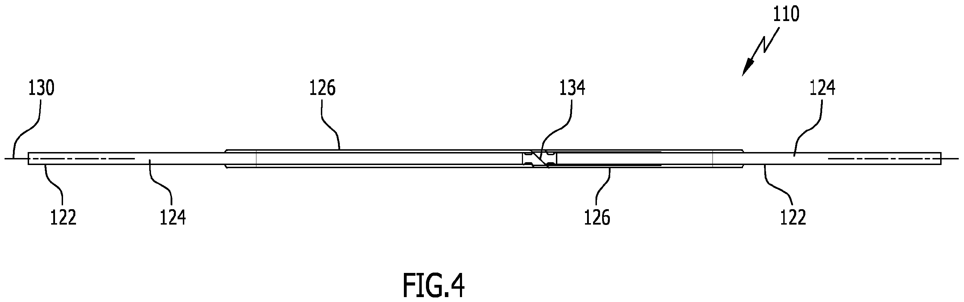

Die Grundkörperteile 124 sind vorzugsweise in einer Richtung senkrecht zu einer in Fig. 4 gezeigten Haupterstreckungsebene 130 des Dichtelements 110, insbesondere in einer Montagerichtung 132, miteinander verbindbar, insbesondere steckverbindbar.

Der elastische Dichtkörper 118 und/oder die elastischen Dichtkörperteile 126 umfassen vorzugsweise ein Elastomermaterial 133 oder sind aus einem Elastomermaterial 133 gebildet. Das Elastomermaterial 133 ist insbesondere ein Ethylen-Acrylat-Kautschuk (AEM). Alternativ oder ergänzend dazu ist das Elastomermaterial 133 ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR) oder ein Silikon-Kautschuk (MVQ), insbesondere ein Vinyl-Methyl-Polysiloxan.

Der Grundkörper 116 und/oder die Grundkörperteile 124 sind insbesondere aus einem metallischen Grundkörpermaterial 135 hergestellt oder umfassen ein metallisches Grundkörpermaterial 135. Das metallische Grundkörpermaterial 135 ist insbesondere Stahl oder Aluminium.

Alternativ oder ergänzend hierzu ist es denkbar, dass der Grundkörper 116 und/oder die Grundkörperteile 124 aus einem Kunststoffmaterial hergestellt sind oder ein Kunststoffmaterial umfassen.

Vorzugsweise sind der Grundkörper 116 und/oder die Grundkörperteile 124 vollständig durch Stanzen und/oder Laserschneiden aus einem metallischen Grundkörpermaterial 135, beispielsweise aus einem Blechmaterial, hergestellt, so dass insbesondere keine weiteren Verfahrensschritte zur Herstellung des Grundkörpers 116 und/oder der Grundkörperteile 124 durchgeführt werden müssen.

Vorzugsweise werden dabei auch die Verbindungsabschnitte 128 der Grundkörperteile 124 durch Stanzen und/oder Laserschneiden hergestellt.

Die elastischen Dichtkörperteile 126 des elastischen Dichtkörpers 118 werden vorzugsweise in einem Spritzgussprozess an jeweils einen Grundkörperteil 124 angespritzt. Beim Anspritzen der elastischen Dichtkörperteile 126 an die Grundkörperteile 124 werden die elastischen Dichtkörperteile 126 insbesondere nicht miteinander verbunden.

In dem Spritzgussprozess werden insbesondere lediglich die einzelnen elastischen Dichtkörperteile 126 an die Grundkörperteile 124 angespritzt und somit die Dichtelementbauteile 122 gebildet.

Bei dem in den Fig. 1 bis 8 gezeigten Dichtelement 110 sind die Dichtelementbauteile 122 bereits mittels der Verbindungsabschnitte 128 miteinander verbunden.

Der Grundkörper 116 des Dichtelements 110 ist dabei vorzugsweise ringförmig, insbesondere ringförmig geschlossen, ausgebildet.

Da der Grundkörper 116 und/oder die Grundkörperteile 124 insbesondere aus einem zumindest näherungsweise unflexiblen oder steifen Material, vorzugsweise aus einem metallischen Grundkörpermaterial 135, hergestellt sind, kann vom Grundkörper 116 insbesondere die lasttragende Funktion des Dichtelements 110 bereitgestellt werden.

Wie in den Fig. 1 und 4 bis 8 deutlich zu erkennen ist, sind das Dichtelement 110 und/oder der Grundkörper 116 vorzugsweise flächig ausgebildet.

Das Dichtelement 110 und/oder der Grundkörper 116 erstrecken sich dabei insbesondere zumindest näherungsweise entlang der Haupterstreckungsebene 130 (vergl. Fig. 4).

Zur Herstellung der in den Figuren gezeigten ringförmig geschlossenen Form des Grundkörpers 116 sind die Dichtelementbauteile 122 miteinander puzzleartig, insbesondere formschlüssig verbindbar.

Die puzzleartige Verbindung der Dichtelementbauteile 122 erfolgt insbesondere durch die Verbindungsabschnitte 128 der Grundkörperteile 124.

Die insbesondere lösbar miteinander verbindbaren Dichtelementbauteile 122 sind vorzugsweise mittelbar oder unmittelbar miteinander verbindbar, insbesondere an einem Stoßbereich 134 der Grundkörperteile 124.

Bei den in den Figuren gezeigten Ausführungsbeispielen des Dichtelements 110 sind die Grundkörperteile 124 mittelbar über die an den Grundkörperteilen 124 angeordneten elastischen Dichtkörperteile 126 miteinander verbunden.

Hierzu sind die elastischen Dichtkörperteile 126 vorzugsweise nicht nur an eine umlaufenden Innenkante 136 des Grundkörpers 116 angespritzt.

Vielmehr sind die elastischen Dichtkörperteile 126 auch an eine Kante 138 des Grundkörpers 116 bzw. der Grundkörperteile 124 im Bereich der Verbindungsabschnitte 128 angespritzt.

Es ist jedoch auch denkbar, die Grundkörperteile 124 im Stoßbereich 134 unmittelbar miteinander zu verbinden und somit die elastischen Dichtkörperteile 126 lediglich an der Innenkante 136 des ringförmig geschlossenen Grundkörpers 116 vorzusehen.

Wie in den Figuren deutlich zu erkennen ist, sind die Grundkörperteile 124 mittels der Verbindungsabschnitte 128 vorzugsweise puzzleartig, insbesondere formschlüssig, miteinander verbindbar.

Die Verbindungsabschnitte 128 sind insbesondere derart komplementär ausgebildet, dass die Verbindungsabschnitte 128 und/oder die an diesen angeordneten elastischen Dichtkörperteile 126 formschlüssig ineinander eingreifen, wenn die Grundkörperteile 124 in Montagerichtung 132 miteinander verbunden werden.

Zur gegenseitigen Verbindung der Grundkörperteile 124 weisen die Verbindungsabschnitte 128 insbesondere jeweils zwei Hinterschnittabschnitte 140 auf.

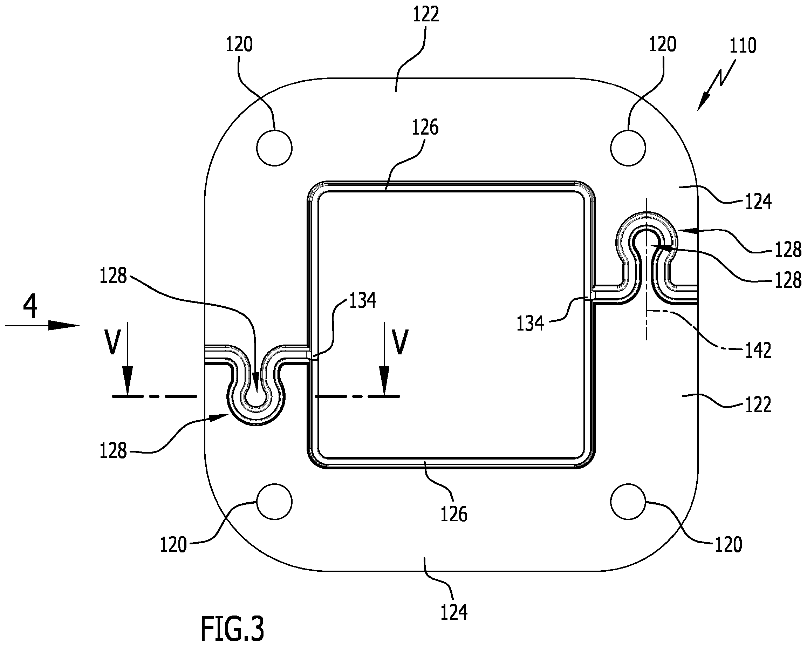

Wie in Fig. 3 deutlich zu erkennen ist, sind die Verbindungsabschnitte 128 vorzugsweise symmetrisch zu einer Symmetrieebene 142 ausgebildet.

Die Hinterschnittabschnitte 140 sind insbesondere derart angeordnet und ausgebildet, dass miteinander verbundene Grundkörperteile 124 im Bereich der Verbindungsabschnitte 128 in einer Richtung parallel zur Haupterstreckungsebene 130 des Dichtelements 110 gekoppelt, insbesondere formschlüssig verbunden sind.

Hierzu hinterschneiden sich die Hinterschnittabschnitte 140 in einer parallel zur Symmetrieebene 142 verlaufenden Richtung.

Miteinander verbundene Grundkörperteile 124 sind daher im Bereich der Verbindungsabschnitte 128 in einer Richtung parallel zur Haupterstreckungsebene 130 des Dichtelements 110 insbesondere formschlüssig verankert.

Die Verbindungsabschnitte 128 umfassen vorzugsweise jeweils eine Verbindungsabschnittsgeometrie 144.

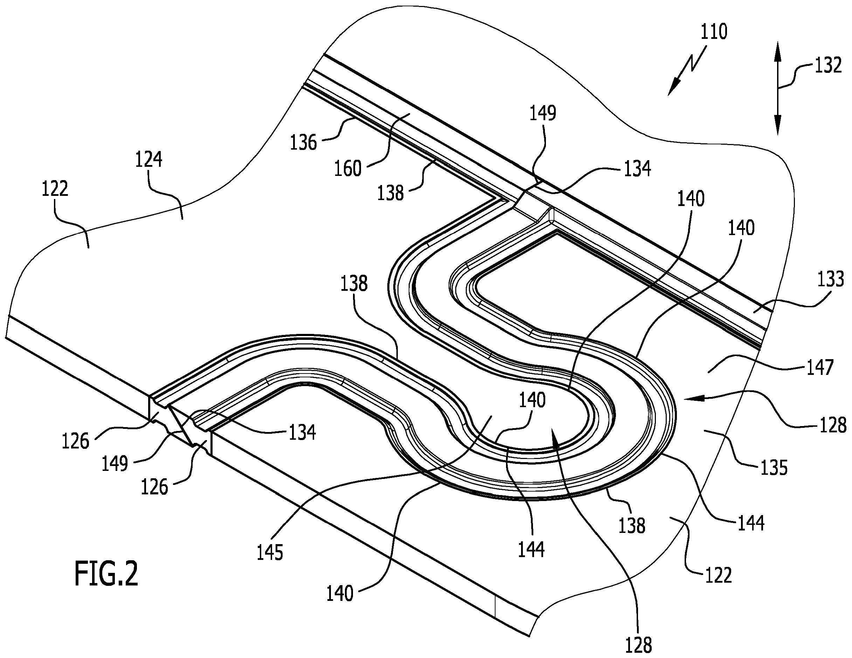

Zwei Verbindungsabschnitte 128 sind insbesondere jeweils derart komplementär zueinander ausgebildet, dass jeweils ein Verbindungsabschnitt 128 eine Positivform 145 der Verbindungsabschnittsgeometrie 144 umfasst, wobei jeweils ein Verbindungsabschnitt 128 eine Negativform 147 der Verbindungsabschnittsgeometrie 144 umfasst (vergl. Fig. 2).

Bei den in den Figuren gezeigten Ausführungsbeispielen des Dichtelements 110 ist die Verbindungsabschnittsgeometrie 144 insbesondere puzzleartig ausgebildet.

Alternativ dazu ist denkbar, dass die Verbindungsabschnittsgeometrie 144, das heißt die Positivform 145 und/oder die Negativform 147, insbesondere eine Schwalbenschwanzgeometrie aufweisen.

Um eine Montage des Dichtelements 110 erleichtern zu können ist insbesondere vorgesehen, dass jeweils nur zwei Verbindungsabschnitte 128 miteinander korrespondieren, d.h. dass jeweils nur zwei Verbindungsabschnitte 128 eine zueinander komplementäre Verbindungsabschnittsgeometrie 144 umfassen.

Insbesondere ist für zu verbindende Dichtelementbauteile 122 und/oder zu verbindende Grundkörperteile 124 jeweils nur eine Verbindungsabschnittsgeometrie 144 vorgesehen, d.h. Positivform 145 und Negativform 147, der Verbindungsabschnitte 128 sind komplementär zueinander ausgebildet. Somit können Dichtelementbauteile 122 und/oder Grundkörperteile 124 insbesondere nicht falsch miteinander verbunden werden.

Wie in den Figuren deutlich zu erkennen ist, sind die elastischen Dichtkörperteile 126 im Stoßbereich 134 vorzugsweise unterbrochen und bilden dort eine Stoßfuge 149 (vergl. Fig. 2).

Die elastischen Dichtkörperteile 126 erstrecken sich daher insbesondere jeweils entlang einer Kante 138 eines jeweiligen Grundkörperteils 124.

Wie oben erwähnt, erstrecken sich die elastischen Dichtkörperteile 126 bei dem in den Figuren gezeigten Ausführungsbeispiel des Dichtelements 110 entlang der Innenkante 136 sowie entlang einer Kante 138 der Verbindungsabschnitte 128 der Grundkörperteile 124.

Insbesondere folgt ein Verlauf der elastischen Dichtkörperteile dabei im Bereich der Verbindungsabschnitte 128 der Verbindungsabschnittsgeometrie 144.

Bei den in den Figuren dargestellten Ausführungsbeispielen des Dichtelements 110 sind die elastischen Dichtkörperteile 126 sowohl an der Positivform 145 als auch an der Negativform 147 der Verbindungsabschnittsgeometrie 144 der Verbindungsabschnitte 128 angeordnet, das heißt sowohl an der Positivform 145 als auch an der Negativform 147 ist jeweils ein elastischer Dichtkörperteil 126 angeordnet.

Alternativ dazu ist es denkbar, dass nur an der Positivform 145 oder nur an der Negativform 147 der Verbindungsabschnittsgeometrie 144 der Verbindungsabschnitte 128 ein elastischer Dichtkörperteil 126 angeordnet ist.

Wenn im Stoßbereich 134 der Grundkörperteile 124 jeweils an beiden Grundkörperteilen 124 ein elastischer Dichtkörperteil 126 angeordnet ist, umfassen die elastischen Dichtkörperteile 126 insbesondere jeweils einen Koppelabschnitt 146 zur Kopplung aneinander anliegender oder einander überlappender elastischer Dichtkörperteile 126.

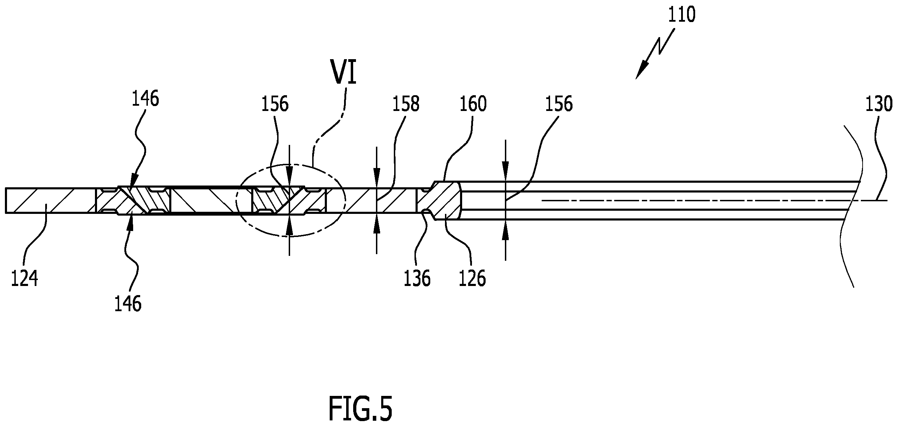

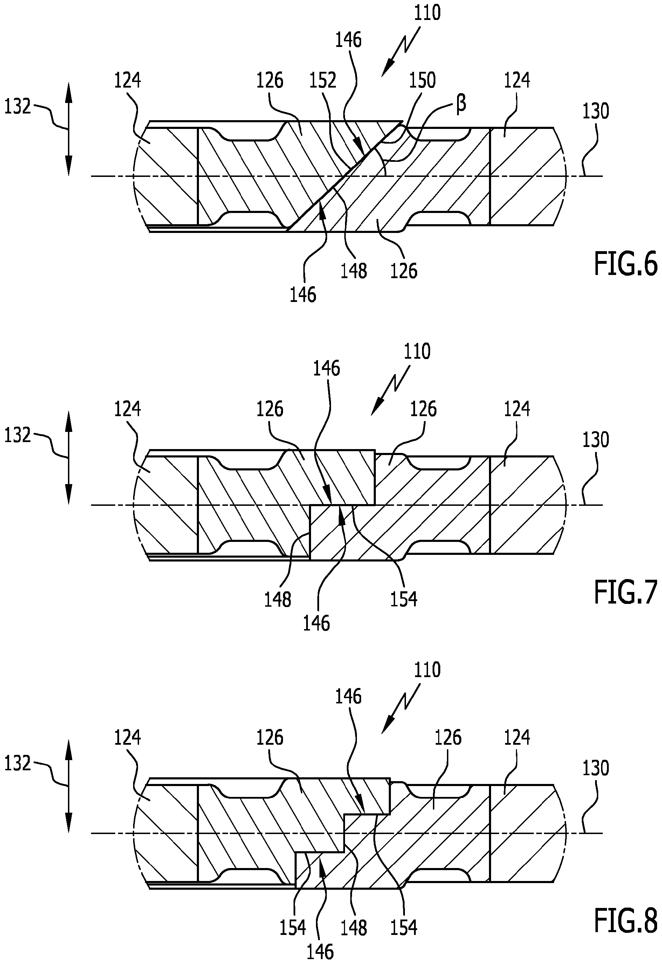

Derartige Koppelabschnitte 146 sind insbesondere in Fig. 5 und in den alternativen Detailansichten in den Fig. 6 bis 8 deutlich zu erkennen.

Die Koppelabschnitte 146 sind insbesondere derart ausgebildet, dass die elastischen Dichtkörperteile 126 im Bereich der Koppelabschnitte 146 dichtend aneinander anliegen, wenn die Dichtelementbauteile 122 und/oder die Grundkörperteile 124 miteinander verbunden sind, insbesondere wenn das Dichtelement 110 zwischen dem ersten Objekt 112 und dem zweiten Objekt 114 angeordnet ist.

Die Koppelabschnitte 146 weisen jeweils eine Koppelgeometrie 148 auf.

Wie insbesondere in den Fig. 6 bis 8 deutlich zu erkennen ist, weisen jeweils zwei elastische Dichtkörperteile 126 eine zueinander komplementäre Koppelgeometrie 148 auf.

Die Koppelgeometrie 148 der Koppelabschnitte 146 weist in Montagerichtung 132 der Dichtelementbauteile 122 und/oder der Grundkörperteile 124, insbesondere keine Hinterschnitte auf.

Vorzugsweise sind die elastischen Dichtkörperteile 126 bei Montage oder Verbindung der Grundkörperteile 124 in einer Richtung senkrecht oder schräg, das heißt quer, zur Haupterstreckungsebene 130 des Dichtelements 110 dichtend aneinander anlegbar.

Insbesondere sind die Grundkörperteile 124 mit den daran angeordneten elastischen Dichtkörperteilen 126 mittels der Verbindungsabschnitte 128 in Montagerichtung 132 verbindbar, ohne dass eine Verbindung der Grundkörperteile 124 von Hinterschnitten der Koppelgeometrie 148 behindert wird.

Bei dem in den Fig. 1 bis 6 gezeigten Ausführungsbeispiel des Dichtelements 110 ist die Koppelgeometrie 148 beispielsweise als Fase 150 oder als Schrägfläche 152 ausgebildet. Die Fase 150 oder Schrägfläche 152 ist insbesondere in einem Winkel β im Bereich von ungefähr 40° bis ungefähr 70° zur Haupterstreckungsebene 130 des Dichtelements 110 angeordnet.

Bei den in den Fig. 7 und 8 gezeigten Ausführungsbeispielen des Dichtelements 110 ist die Koppelgeometrie 148 getreppt ausgebildet und weist eine Stufe 154 (vergl. Fig. 7) oder zwei oder mehr Stufen 154 (vergl. Fig. 8) auf. Es ist jedoch auch denkbar, dass die Koppelgeometrie 148 gewellt ausgebildet ist.

Wenn im Stoßbereich 134 nur jeweils an einem Grundkörperteil 124 ein elastischer Dichtkörperteil 126 vorgesehen ist, ist vorzugsweise keine Koppelgeometrie 148 erforderlich.

Wie in Fig. 5 deutlich zu erkennen ist, weist der elastische Dichtkörper 118 in einer Richtung senkrecht zur Haupterstreckungsebene 130 des Dichtelements 110 eine Dichtkörperhöhe 156 auf.

Der Grundkörper 116 weist in einer Richtung senkrecht zur Haupterstreckungsebene 130 des Dichtelements 110 eine Grundkörperhöhe 158 auf.

Die Dichtkörperhöhe 156 ist vorzugsweise größer als die Grundkörperhöhe 158, insbesondere ca. 15 % bis ca. 40 % größer, vorzugsweise ca. 25 % größer.

Der Grundkörper 116 weist vorzugsweise eine Grundkörperhöhe 158 im Bereich von ungefähr 1 bis ungefähr 3 mm, insbesondere im Bereich von ungefähr 1,5 bis ungefähr 2 mm, auf.

Somit kann insbesondere erreicht werden, dass der elastische Dichtkörper 118 zumindest bereichsweise komprimiert wird, wenn das Dichtelement 110 zwischen zwei Objekten 112, 114 angeordnet ist.

Im Bereich einer an der Innenkante 136 des Grundkörpers 116 angeordneten Dichtlippe 160 weist der elastische Dichtkörper 118 eine Dichtkörperhöhe 156 auf, welche größer ist als eine Dichtkörperhöhe 156 im Bereich der Verbindungsabschnitte 128 und/oder der Koppelabschnitte 146 (vergl. Fig. 5).

Wie in den Fig. 1 und 3 deutlich zu erkennen ist, sind die Dichtelementbauteile 122 nahezu identisch ausgebildet.

Das Dichtelement 110 umfasst bei den in den Figuren gezeigten Ausführungsbeispielen zwei identische Grundkörperteile 124.

Die elastischen Dichtkörperteile 126 des Dichtelements 110 sind nahezu identisch, jedoch im Stoßbereich 134, insbesondere im Bereich der Koppelabschnitte 146, verschieden ausgebildet.

Jedem Grundkörperteil 124 ist jeweils ein elastischer Dichtkörperteil 126 zugeordnet, so dass die Anzahl der elastischen Dichtkörperteile 126 insbesondere einer Anzahl der Grundkörperteile 124 entspricht.

Insgesamt kann eine Dichtungsanordnung 100 mit einem einfach und kostengünstig herstellbaren Dichtelement 110 bereitgestellt werden, welche eine einfache und zuverlässige Abdichtung eines ersten Fluidraums von einem zweiten Fluidraum ermöglicht.

## Patentansprüche

1. Dichtungsanordnung (100), insbesondere zur Abdichtung eines ersten Fluidraums (102) von einem zweiten Fluidraum (104) oder mehreren Fluidräumen, umfassend ein Dichtelement (110) zur Anordnung zwischen einem ersten Objekt (112) und einem zweiten Objekt (114), wobei das Dichtelement (110) zwei oder mehrere miteinander verbindbare oder miteinander verbundene Dichtelementbauteile (122) umfasst, welche jeweils einen Grundkörperteil (124) und einen am Grundkörperteil (124) angeordneten elastischen Dichtkörperteil (126) umfassen,
wobei die Grundkörperteile (124) der Dichtelementbauteile (122) einen vorzugsweise formstabilen Grundkörper (116) des Dichtelements (110) bilden, wobei die elastischen Dichtkörperteile (124) der Dichtelementbauteile (122) einen elastischen Dichtkörper (118) zum Bereitstellen einer Dichtfunktion des Dichtelements (110) bilden,
wobei die elastischen Dichtkörperteile (126) sich jeweils entlang einer Kante (138) eines Stoßbereichs (134) der Grundkörperteile (124) erstrecken;
**dadurch gekennzeichnet, dass**
- die Dichtelementbauteile (122), insbesondere zur Herstellung einer oder mehrerer ringförmig geschlossener Formen des Grundkörpers (116), puzzleartig formschlüssig miteinander verbindbar sind; und/oder
- die Dichtelementbauteile (122) durch mittelbare oder unmittelbare Verbindung der Grundkörperteile (124) miteinander, insbesondere an einem Stoßbereich (134) der Grundkörperteile (124), verbindbar sind, die Grundkörperteile (124) jeweils einen oder mehrere, insbesondere jeweils zwei, Verbindungsabschnitte (128) zur Verbindung der Grundkörperteile (124) miteinander umfassen, wobei die Verbindungsabschnitte (128) insbesondere jeweils einen oder mehrere, insbesondere jeweils zwei, Hinterschnittabschnitte (140) aufweisen; und/oder
- die elastischen Dichtkörperteile (126) jeweils einen Koppelabschnitt (146) zur Kopplung aneinander anliegender oder einander überlappender elastischer Dichtkörperteile (126) umfassen, wobei die Koppelabschnitte (146) jeweils eine Koppelgeometrie (148) aufweisen, wobei die Koppelgeometrie (148) eine Fase (150) oder eine Schrägfläche (152) ist, welche eine schräg zur Haupterstreckungsebene (130) angeordnete Fläche ist, oder wobei die Koppelgeometrie (148) gestuft oder gewellt ausgebildet ist.

2. Dichtungsanordnung (100) nach Anspruch 1, **dadurch gekennzeichnet, dass** das Dichtelement (110) mehrere identische Dichtelementbauteile (122) und/oder mehrere identische Grundkörperteile (124) und/oder mehrere identische elastische Dichtkörperteile (126) umfasst.

3. Dichtungsanordnung (100) nach einem der Ansprüche 1 oder 2, **dadurch gekennzeichnet, dass** die Grundkörperteile (124) in einer Richtung senkrecht zu einer Haupterstreckungsebene (130) des Dichtelements (110) miteinander verbindbar, insbesondere steckverbindbar, sind.

4. Dichtungsanordnung (100) nach einem der Ansprüche 1 bis 3, **dadurch gekennzeichnet, dass** der elastische Dichtkörper (118) an einer Kante (138) des Grundkörpers (116) angeordnet ist.

5. Dichtungsanordnung (100) nach einem der Ansprüche 1 bis 4, **dadurch gekennzeichnet, dass** der elastische Dichtkörper (118) in einer Richtung senkrecht zu einer Haupterstreckungsebene (130) des Dichtelements (110) eine Dichtkörperhöhe (156) aufweist, wobei der Grundkörper (116) in einer Richtung senkrecht zur Haupterstreckungsebene (130) des Dichtelements (110) eine Grundkörperhöhe (158) aufweist, wobei die Dichtkörperhöhe (156) größer ist als die Grundkörperhöhe (158).

6. Dichtungsanordnung (100) nach einem der Ansprüche 1 bis 5, **dadurch gekennzeichnet, dass** der elastische Dichtkörper (118) ein Elastomermaterial (133) umfasst oder aus einem Elastomermaterial (133) gebildet ist, wobei das Elastomermaterial (133) vorzugsweise ein Ethylen-Acrylat-Kautschuk (AEM), ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR) oder ein Silikon-Kautschuk (MVQ), insbesondere ein Vinyl-Methyl-Polysiloxan, ist und/oder dass der Grundkörper (116) aus einem metallischen Grundkörpermaterial (135) hergestellt ist oder ein metallisches Grundkörpermaterial (135) umfasst, wobei das metallische Grundkörpermaterial (135) insbesondere Stahl oder Aluminium ist.

7. Dichtungsanordnung (100) nach einem der Ansprüche 1 bis 6, **dadurch gekennzeichnet, dass** der Grundkörper (116) und/oder die Grundkörperteile (124) durch Stanzen und/oder durch Laserschneiden und/oder durch Wasserstrahlschneiden und/oder durch manuelles Schneiden hergestellt sind.

8. Batterie- oder Steuerungskasten (106), insbesondere für ein Kraftfahrzeug (108), umfassend eine Dichtungsanordnung (100) nach einem der Ansprüche 1 bis 7.

9. Kraftfahrzeug (108), umfassend eine oder mehrere Dichtungsanordnungen (100) nach einem der Ansprüche 1 bis 7.

10. Kraftfahrzeug nach Anspruch 9, umfassend einen Batterie- oder Steuerungskasten (106) nach Anspruch 8.

11. Verfahren zur Herstellung einer Dichtungsanordnung (100) nach einem der Ansprüche 1 bis 7 zur Abdichtung eines ersten Fluidraums (102) von einem zweiten Fluidraum (104) oder mehreren Fluidräumen,
wobei das Verfahren Folgendes umfasst:
Bereitstellen mehrerer Dichtelementbauteile (122), welche jeweils einen Grundkörperteil (124) und einen am Grundkörperteil (124) angeordneten elastischen Dichtkörperteil (126) umfassen;
puzzleartiges und formschlüssiges Verbinden der Dichtelementbauteile (122) miteinander.

12. Verfahren nach Anspruch 11, **dadurch gekennzeichnet, dass** die Dichtelementbauteile (122) als voneinander separate Bauteile hergestellt werden, wobei jeweils ein elastischer Dichtkörperteil (126) an jeweils einen Grundkörperteil (124) in einem Spritzgussprozess angespritzt wird.

## Claims

1. Seal arrangement (100), in particular for sealing a first fluid space (102) from a second fluid space (104) or a plurality of fluid spaces, comprising a sealing element (110) for arranging between a first object (112) and a second object (114), wherein the sealing element (110) comprises two or more mutually connectible or mutually connected sealing element components (122) which each comprise a base body part (124) and an elastic sealing body part (126) arranged on the base body part (124),
wherein the base body parts (124) of the sealing element components (122) form a preferably dimensionally-stable base body (116) of the sealing element (110),
wherein the elastic sealing body parts (124) of the sealing element components (122) form an elastic sealing body (118) for providing a sealing function of the sealing element (110),
wherein the elastic sealing body parts (126) each extend along an edge (138) of an abutment region (134) of the base body parts (124);
**characterized in that**
- the sealing element components (122) are connectible to each other in a puzzle-like positive-locking manner, in particular for producing one or more annularly closed shapes of the base body (116);
and/or
- the sealing element components (122) are connectible to each other, in particular at an abutment region (134) of the base body parts (124), by indirect or direct connection of the base body parts (124), the base body parts (124) each comprise one or more, in particular in each case two, connecting portions (128) for connecting the base body parts (124) to each other, wherein the connecting portions (128) in particular each have one or more, in particular in each case two, undercut portions (140);
and/or
- the elastic sealing body parts (126) each comprise a coupling portion (146) for coupling mutually abutting or mutually overlapping elastic sealing body parts (126), wherein the coupling portions (146) each have a coupling geometry (148), wherein the coupling geometry (148) is a chamfer (150) or an inclined surface (152) which is a surface arranged so as to be inclined with respect to the main plane of extent (130), or wherein the coupling geometry (148) is stepped or corrugated.

2. Seal arrangement (100) according to claim 1, **characterized in that** the sealing element (110) comprises a plurality of identical sealing element components (122) and/or a plurality of identical base body parts (124) and/or a plurality of identical elastic sealing body parts (126).

3. Seal arrangement (100) according to either claim 1 or 2, **characterized in that** the base body parts (124) are connectible to each other, in particular connectible by plugging, in a direction perpendicular to a main plane of extent (130) of the sealing element (110).

4. Seal arrangement (100) according to any of claims 1 to 3, **characterized in that** the elastic sealing body (118) is arranged on an edge (138) of the base body (116).

5. Sealing arrangement (100) according to any of claims 1 to 4, **characterized in that** the elastic sealing body (118) has a sealing body height (156) in a direction perpendicular to a main plane of extent (130) of the sealing element (110), wherein the base body (116) has a base body height (158) in a direction perpendicular to the main plane of extent (130) of the sealing element (110), wherein the sealing body height (156) is greater than the base body height (158).

6. Sealing arrangement (100) according to any of claims 1 to 5, **characterized in that** the elastic sealing body (118) comprises an elastomer material (133) or is made of an elastomer material (133), wherein the elastomer material (133) is preferably an ethylene acrylate rubber (AEM), an ethylene propylene diene rubber (EPDM), an acrylate rubber (ACM), a fluororubber (FKM), a hydrogenated acrylonitrile butadiene rubber (HNBR), or a silicone rubber (MVQ), in particular a vinyl methyl polysiloxane, and/or **in that** the base body (116) is made of a metallic base body material (135) or comprises a metallic base body material (135), wherein the metallic base body material (135) in particular is steel or aluminum.

7. Sealing arrangement (100) according to any of claims 1 to 6,
**characterized in that** the base body (116) and/or the base body parts (124) are produced by means of punching and/or by means of laser cutting and/or by means of water jet cutting and/or by means of manual cutting.

8. Battery or control box (106), in particular for a motor vehicle (108), comprising a seal arrangement (100) according to any of claims 1 to 7.

9. Motor vehicle (108) comprising one or more seal arrangements (100) according to any of claims 1 to 7.

10. Motor vehicle according to claim 9, comprising a battery or control box (106) according to claim 8.

11. Method for producing a seal arrangement (100) according to any of claims 1 to 7 for sealing a first fluid space (102) from a second fluid space (104) or a plurality of fluid spaces,
wherein the method comprises the following:
providing a plurality of sealing element components (122) which each comprise a base body part (124) and an elastic sealing body part (126) arranged on the base body part (124);
connecting the sealing element components (122) to each other in a puzzle-like and form-locking manner.

12. Method according to claim 11, **characterized in that** the sealing element components (122) are produced as mutually separate components, wherein in each case an elastic sealing body part (126) is injection molded onto a corresponding base body part (124) in an injection molding process.

## Revendications

1. Système d'étanchéité (100), destiné en particulier à assurer l'étanchéité d'une première chambre à fluide (102) par rapport à une seconde chambre à fluide (104) ou à plusieurs chambres à fluide, comprenant un élément d'étanchéité (110) destiné à être disposé entre un premier objet (112) et un second objet (114), dans lequel l'élément d'étanchéité (110) comprend deux composants d'élément d'étanchéité (122) ou plus pouvant être reliés entre eux ou étant reliés entre eux, lesquels comprennent respectivement une partie de corps de base (124) et une partie de corps d'étanchéité élastique (126) disposée sur la partie de corps de base (124),
dans lequel les parties de corps de base (124) des composants d'élément d'étanchéité (122) forment un corps de base (116), de préférence indéformable, de l'élément d'étanchéité (110),
dans lequel les parties de corps d'étanchéité élastiques (124) des composants d'élément d'étanchéité (122) forment un corps d'étanchéité élastique (118) destiné à assurer une fonction d'étanchéité de l'élément d'étanchéité (110),
dans lequel les parties de corps d'étanchéité élastiques (126) s'étendent respectivement le long d'un bord (138) d'une zone de butée (134) des parties de corps de base (124) ;
**caractérisé en ce que**
- les composants d'élément d'étanchéité (122) peuvent être reliés entre eux par complémentarité de forme à la manière d'un puzzle, en particulier pour la fabrication d'une ou plusieurs formes fermées de manière annulaire du corps de base (116) ;
et/ou
- les composants d'élément d'étanchéité (122) peuvent être reliés entre eux par liaison directe ou indirecte des parties de corps de base (124), en particulier au niveau d'une zone de butée (134) des parties de corps de base (124), les parties de corps de base (124) comprennent respectivement une ou plusieurs, en particulier respectivement deux, sections de liaison (128) destinées à relier les parties de corps de base (124) entre elles, dans lequel les sections de liaison (128) présentent en particulier respectivement une ou plusieurs, en particulier respectivement deux, sections de contre-dépouille (140) ;
et/ou
- les parties de corps d'étanchéité élastiques (126) comprennent respectivement une section d'accouplement (146) destinée à l'accouplement de parties de corps d'étanchéité élastiques (126) s'appliquant les unes contre les autres ou se chevauchant, dans lequel les sections d'accouplement (146) présentent respectivement une géométrie d'accouplement (148), dans lequel la géométrie d'accouplement (148) est un chanfrein (150) ou une surface biseautée (152) qui est une surface disposée de manière biseautée par rapport au plan d'extension principal (130), ou dans lequel la géométrie d'accouplement (148) est réalisée de manière étagée ou ondulée.

2. Système d'étanchéité (100) selon la revendication 1, **caractérisé en ce que** l'élément d'étanchéité (110) comprend plusieurs composants d'élément d'étanchéité (122) identiques et/ou plusieurs parties de corps de base (124) identiques et/ou plusieurs parties de corps d'étanchéité élastiques (126) identiques.

3. Système d'étanchéité (100) selon l'une des revendications 1 ou 2,
**caractérisé en ce que** les parties de corps de base (124) peuvent être reliées entre elles, en particulier par liaison enfichable, dans une direction perpendiculaire à un plan d'extension principal (130) de l'élément d'étanchéité (110).

4. Système d'étanchéité (100) selon l'une des revendications 1 à 3,
**caractérisé en ce que** le corps d'étanchéité élastique (118) est disposé sur un bord (138) du corps de base (116).

5. Système d'étanchéité (100) selon l'une des revendications 1 à 4,
**caractérisé en ce que** le corps d'étanchéité élastique (118) présente une hauteur de corps d'étanchéité (156) dans une direction perpendiculaire à un plan d'extension principal (130) de l'élément d'étanchéité (110), dans lequel le corps de base (116) présente une hauteur de corps de base (158) dans une direction perpendiculaire au plan d'extension principal (130) de l'élément d'étanchéité (110), dans lequel la hauteur de corps d'étanchéité (156) est supérieure à la hauteur de corps de base (158).

6. Système d'étanchéité (100) selon l'une des revendications 1 à 5,
**caractérisé en ce que** le corps d'étanchéité élastique (118) comprend un matériau élastomère (133) ou est formé à partir d'un matériau élastomère (133), dans lequel le matériau élastomère (133) est de préférence un caoutchouc éthylène-acrylate (AEM), caoutchouc éthylène-propylène-diène (EPDM), caoutchouc acrylate (ACM), caoutchouc fluoré (FKM), caoutchouc acrylonitrile-butadiène hydrogéné (HNBR) ou caoutchouc de silicone (MVQ), en particulier un vinyl-méthyl-polysiloxane, et/ou **en ce que** le corps de base (116) est fabriqué à partir d'un matériau de corps de base métallique (135) ou comprend un matériau de corps de base métallique (135), dans lequel le matériau de corps de base métallique (135) est en particulier de l'acier ou de l'aluminium.

7. Système d'étanchéité (100) selon l'une des revendications 1 à 6,
**caractérisé en ce que** le corps de base (116) et/ou les parties de corps de base (124) sont fabriqués par estampage et/ou par découpage au laser et/ou par découpage au jet d'eau et/ou par découpage manuel.

8. Compartiment à batterie ou de commande (106), en particulier pour un véhicule automobile (108), comprenant un système d'étanchéité (100) selon l'une des revendications 1 à 7.

9. Véhicule automobile (108), comprenant un ou plusieurs systèmes d'étanchéité (100) selon l'une des revendications 1 à 7.

10. Véhicule automobile selon la revendication 9, comprenant un compartiment à batterie ou de commande (106) selon la revendication 8.

11. Procédé de fabrication d'un système d'étanchéité (100) selon l'une des revendications 1 à 7, permettant d'assurer l'étanchéité d'une première chambre à fluide (102) par rapport à une seconde chambre à fluide (104) ou à plusieurs chambres à fluide,
dans lequel le procédé comprend les étapes suivantes :
fourniture de plusieurs composants d'élément d'étanchéité (122), lesquels comprennent respectivement une partie de corps de base (124) et une partie de corps d'étanchéité élastique (126) disposée sur la partie de corps de base (124) ;
liaison par complémentarité de forme et à la manière d'un puzzle des composants d'éléments d'étanchéité (122) entre eux.

12. Procédé selon la revendication 11, **caractérisé en ce que** les composants d'élément d'étanchéité (122) sont fabriqués sous forme de composants séparés les uns des autres, dans lequel respectivement une partie de corps d'étanchéité élastique (126) est moulée par injection sur respectivement une partie de corps de base (124) dans un processus de moulage par injection.
